# FASCICULE DE BREVET EUROPEEN

(11) **EP 1 097 830 B1**
(45) Date de publication et mention de la délivrance du brevet: **16.06.2004**
(21) Numéro de dépôt: 00403054.0
(22) Date de dépôt: 02.11.2000
(51) Int. Cl.: B60K 6/02, F16H 3/62, B60K 6/04, B60K 41/00

(54) **Groupe motopropulseur hybride comportant au moins deux trains épicycloidaux**
Hybridantriebsgruppe mit mindestens zwei Planetenradgetrieben
Hybrid drive unit with at least two planetary gearings

(30) Priorité: 03.11.1999 FR 9913702
(43) Date de publication de la demande: 09.05.2001
(73) Titulaire: Renault s.a.s., 92100 Boulogne Billancourt (FR)
(72) Inventeur: Caillard, Benoît, 92260 Fontenay aux Roses (FR); Chauvelier, Eric, 78320 Le Mesnil Saint Denis (FR)

(56) Documents cités:
- FR-A- 2 774 040
- US-A- 3 861 484
- US-A- 5 558 588

## Description

L'invention concerne un groupe motopropulseur pour un véhicule automobile à motorisation hybride.

L'invention concerne un groupe motopropulseur pour un véhicule automobile à motorisation hybride fonctionnant selon plusieurs modes, du type qui comporte au moins deux trains épicycloïdaux comportant chacun des éléments tels qu'une couronne, un planétaire, et un porte-satellites qui sont susceptibles d'être liés en rotation à des organes du groupe motopropulseur, notamment à un arbre de sortie d'une première machine électrique et à un arbre de sortie d'une deuxième machine électrique qui sont susceptibles chacune de fonctionner en moteur ou en générateur, à un arbre de sortie d'un moteur thermique, et à un pont destiné à transmettre une puissance motrice à des roues du véhicule.

On connaît de nombreux exemples de groupes motopropulseurs à motorisation hybride de ce type.

Le document US-3.861.484 A décrit et représente un groupe motopropulseur de ce type, qui comporte un premier train épicycloïdal dont le planétaire est accouplé à un moteur électrique, un second train épicycloïdal dont le planétaire est accouplé à un alternateur, les couronnes des deux trains épicycloïdaux étant solidaires en rotation l'une de l'autre et accouplées au moteur thermique, et les porte-satellites des deux trains épicycloïdaux étant solidaires en rotation l'un de l'autre et accouplés au pont. Le moteur électrique et l'alternateur sont reliés à une batterie d'accumulateurs du véhicule.

Un tel groupe motopropulseur permet notamment d'assurer la traction du véhicule selon un mode de fonctionnement hybride dans lequel le moteur thermique et le moteur électrique participent à la traction du véhicule. Dans ce mode de fonctionnement, le moteur électrique et l'alternateur permettent de réguler le moteur thermique en vitesse de manière à le placer, quel que soit son régime, à un "point de fonctionnement" pour lequel son rendement est le meilleur et dans lequel il consomme le moins.

Toutefois, le moteur électrique et l'alternateur nécessitent à cet effet d'être dimensionnés de façon à pouvoir fournir des vitesses et couples appropriés aux trains épicycloïdaux, ce qui les rend particulièrement encombrants.

De plus, la régulation de la vitesse et du couple du moteur thermique par le moteur électrique et l'alternateur provoque, tout au long du fonctionnement, une série de décharges et de recharges de la batterie d'accumulateurs, ce qui tend à réduire notablement sa durée de vie.

Le document US 5 558 588 A divulgue un groupe motopropulseur en accord avec le préambule de la revendication 1.

Pour résoudre ces inconvénients, l'invention propose un groupe motopropulseur du type décrit précédemment, qui permet de réduire l'encombrement des machines électriques utilisées, et qui permet de limiter les transferts d'énergie électrique mettant en oeuvre la batterie d'accumulateurs en utilisant différents rapports de démultiplication proposés par les trains épicycloïdaux de façon à placer le moteur thermique à son point de fonctionnement optimal.

Dans ce but l'invention propose un groupe motopropulseur du type décrit précédemment, caractérisé en ce qu'il comporte des moyens d'embrayage d'un desdits organes du groupe motopropulseur avec un élément de chacun desdits au moins deux trains épicycloïdaux, et en ce que la deuxième machine électrique est accouplée en permanence à un élément d'un train épicycloïdal déterminé, pour que le pont et les roues soient entraînées sans discontinuité de couple par un autre desdits organes du groupe motopropulseur.

Selon d'autres caractéristiaues de l'invention :
- le groupe motopropulseur comporte des moyens électroniques de commande du moteur thermique, des deux machines électriques et des moyens d'embrayage ;
- le groupe motopropulseur comporte un premier et un second trains épicycloïdaux ;
- le porte-satellites du premier train épicycloïdal et la couronne du second train épicycloïdal sont liés en rotation l'un à l'autre et sont liés en rotation directement à l'arbre de sortie du moteur thermique, le planétaire du second train épicycloïdal est lié en rotation directement à l'arbre de sortie de la deuxième machine électrique, le planétaire du premier train épicycloïdal est susceptible d'être lié en rotation à la première machine électrique par l'intermédiaire d'un premier embrayage, et la couronne du premier train épicycloïdal et le porte-satellites du second trains épicycloïdal sont liés en rotation l'un à l'autre, sont liés en rotation au pont, et sont susceptibles d'être liés en rotation à la première machine électrique par l'intermédiaire d'un second embrayage ;
- les planétaires des premier et second trains épicycloïdaux sont liés en rotation l'un à l'autre et sont liés en rotation directement à l'arbre de sortie du moteur thermique, les couronnes des premier et second trains épicycloïdaux sont respectivement liées en rotation aux première et deuxième machines électriques, le porte-satellites du second train épicycloïdal est lié en rotation au pont, et le porte-satellites du premier train épicycloïdal est susceptible d'être lié en rotation au pont sélectivement par l'intermédiaire de l'un ou l'autre d'un premier et d'un second embrayage associés chacun à un engrenage de rapport de démultiplication différent ;
- le groupe motopropulseur comporte un premier, un deuxième et un troisième trains épicycloïdaux ;
- le porte-satellites du premier train épicycloïdal, le planétaire du deuxième train épicycloïdal et la couronne du troisième train épicycloïdal sont liés en rotation les uns aux autres et sont liés en rotation directement à l'arbre de sortie du moteur thermique, le planétaire du troisième train épicycloïdal est lié en rotation directement à l'arbre de sortie de la deuxième machine électrique, le planétaire du premier train épicycloïdal est susceptible d'être lié en rotation à la première machine électrique par l'intermédiaire d'un premier embrayage, la couronne du second train épicycloïdal est susceptible d'être liée en rotation à la première machine électrique par l'intermédiaire d'un second embrayage, et la couronne du premier train épicycloïdal, le porte-satellites du deuxième train épicycloïdal et le porte-satellites du troisième train épicycloïdal sont liés en rotation les uns aux autres et sont liés en rotation au pont ;
- les moyens électroniques de commande du moteur thermique, des deux machines électriques et des deux embrayages établissent au moins :
   - un mode de fonctionnement tout électrique du groupe motopropulseur, dans lequel le moteur thermique est à l'arrêt, le premier embrayage est débrayé, le second embrayage est embrayé, et les deux machines électriques fonctionnent en moteur, les moyens électroniques de commande régulant le couple fourni par les deux machine.s électriques,
   - un mode de rechargement à l'arrêt dans lequel le moteur thermique est en marche, le premier embrayage est débrayé, le second embrayage est embrayé, et la première machine électrique fonctionne en générateur,
   - un mode de démarrage du moteur thermique dans lequel, indépendamment de l'état des premier et second embrayage et de la première machine électrique, la deuxième machine électrique fonctionne en moteur,
   - un premier mode de fonctionnement hybride à vitesse réduite dans lequel le moteur thermique est en marche, le premier embrayage est débrayé, le second embrayage est embrayé, la première machine électrique fonctionne en moteur pour bloquer la couronne du deuxième train épicycloïdal, et la deuxième machine électrique fonctionne à vide,
   - un second mode de fonctionnement hybride à vitesse réduite dans lequel le moteur thermique est en marche, le premier embrayage est débrayé, le second embrayage est embrayé, la première machine électrique fonctionne à vide, et la deuxième machine électrique fonctionne en moteur pour bloquer le planétaire du troisième train épicycloïdal,
   - un mode de fonctionnement hybride à vitesse intermédiaire dans lequel le moteur thermique est en marche, le premier embrayage est embrayé, le second embrayage est débrayé, la première machine électrique fonctionne en moteur pour bloquer le planétaire du premier train épicycloïdal, et la deuxième machine électrique fonctionne à vide,
   - un mode de fonctionnement à vitesse élevée dans lequel le moteur thermique est en marche, les deux embrayages sont embrayés, et les deux machines électriques fonctionnent à vide ;
- la couronne du premier train épicycloïdal est susceptible d'être liée en rotation à la première machine électrique par l'intermédiaire d'un premier embrayage, le planétaire du premier train épicycloïdal et le porte-satellites du deuxième train épicycloïdal sont liés en rotation l'un à l'autre et sont liés en rotation à l'arbre de sortie du moteur thermique, les planétaires des deuxième et troisième trains épicycloïdaux sont liés en rotation l'un à l'autre, et le porte-satellites du premier train épicycloïdal, la couronne du deuxième train épicycloïdal, et le porte-satellites du troisième train épicycloïdal sont liés en rotation les uns aux autres et sont liés en rotation au pont ;
- le planétaire du troisième train épicycloïdal est susceptible d'être lié en rotation à la première machine électrique par l'intermédiaire d'un second embrayage, et la couronne du troisième train épicycloïdal est liée en rotation à la deuxième machine électrique ;
- la couronne du troisième train épicycloïdal est susceptible d'être liée en rotation à la première machine électrique par l'intermédiaire d'un second embrayage, et le planétaire du troisième train épicycloïdal est lié en rotation à la deuxième machine électrique.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe d'un groupe motopropulseur selon un premier mode de réalisation de l'invention ;
- la figure 2 est un tableau illustrant le fonctionnement du module électronique de commande et plus particulièrement les consignes qu'il est susceptible de délivrer aux deux machines électriques et aux deux embrayages selon les différents modes de fonctionnement du groupe motopropulseur de la figure 1 ;
- la figure 3 est une vue schématique en coupe d'un groupe motopropulseur selon un deuxième mode de réalisation de l'invention ;
- la figure 4 est une vue schématique en coupe d'un groupe motopropulseur selon un troisième mode de réalisation de l'invention ;
- la figure 5 est une vue schématique en coupe d'un groupe motopropulseur selon un quatrième mode de réalisation de l'invention ;
- la figure 6 est une vue schématique en coupe d'un groupe motopropulseur selon un cinquième mode de réalisation de l'invention.

Dans la description qui va suivre, des chiffres de référence identiques désignent des pièces identiques ou ayant des fonctions similaires.

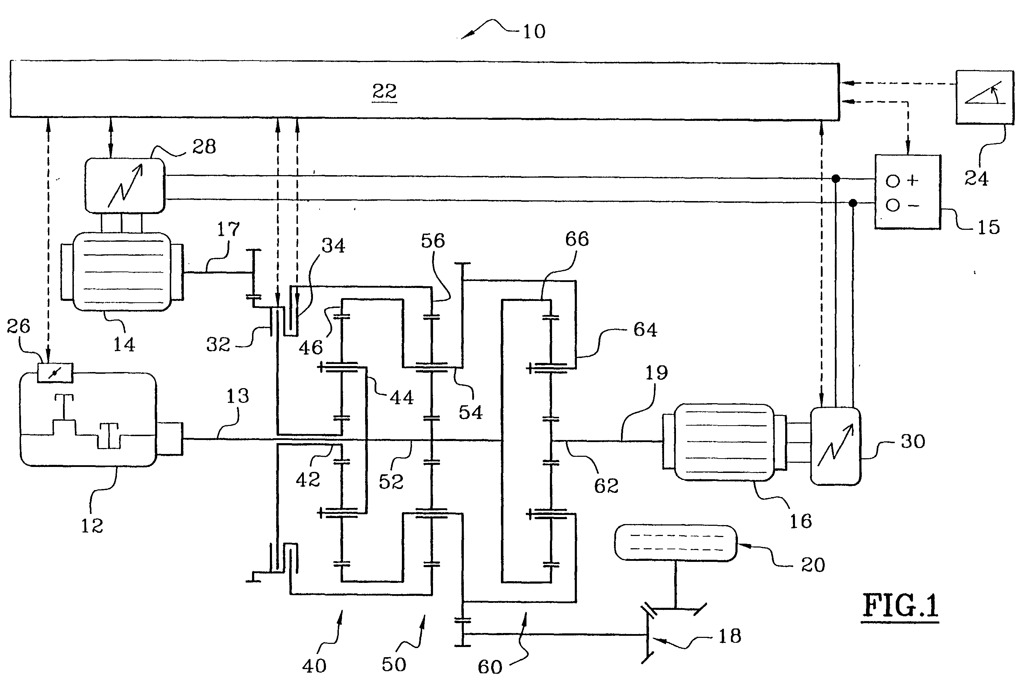

On a représenté aux figures 1 et 3 à 6 l'ensemble d'un groupe motopropulseur 10 pour véhicule automobile à motorisation hybride réalisé conformément à l'invention.

De manière connue, le groupe motopropulseur 10 comporte un moteur thermique 12 une première machine électrique 14 et une deuxième machine électrique 16, qui sont accouplés ensemble, ici par l'intermédiaire de deux trains épicycloïdaux pour transmettre une puissance motrice à un pont 18 entraînant au moins une roue 20 véhicule.

En particulier, le moteur thermique 12 comporte un arbre 13 de sortie, la première machine électrique 14 comporte un arbre 17 de sortie, et la deuxième machine électrique 16 comporte un arbre 19 de sortie qui sont accouplés aux deux trains épicycloïdaux, comme il sera décrit plus explicitement dans la suite de la présente description. Chaque train épicycloïdal comporte des éléments tels qu'une couronne, un planétaire, et. un porte-satellite(s) qui sont susceptibles d'être liés en rotation à des organes du groupe motopropulseur 10 tels que le moteur 12, les machines électriques 14 et 16, et le pont 18.

La première machine électrique 14 et la deuxième machine électrique 16 sont susceptibles de fonctionner chacune en moteur électrique ou en générateur de courant, et sont toutes deux reliées à une batterie 15 d'accumulateurs du véhicule.

Le moteur thermique 12 et les deux machines électriques 14 et 16 sont commandés par des moyens électroniques de commande, comportant notamment un module 22 électronique de commande qui, en réponse à l'actionnement d'une pédale d'accélérateur 24 par le conducteur du véhicule, est susceptible de commander un papillon 26 de commande des gaz du moteur thermique 12, un boîtier électronique 28 de commande de la première machine électrique 14, et un boîtier électronique 30 de commande de la deuxième machine électrique 16.

Conformément à l'invention, la deuxième machine électrique 16 est accouplée en permanence à un élément d'un train épicycloïdal déterminé, et le groupe motopropulseur 10 comporte des moyens embrayage d'un des organes du groupe motopropulseur 10 précédemment évoqué avec un élément de chacun des deux trains épicycloïdaux, pour que le pont 18 et les roues 20 soient entraînées sans discontinuité de couple par un autre desdits organes du groupe motopropulseur 10.

La figure 1 illustre un premier mode de réalisation de l'invention dans lequel le groupe motopropulseur 10 comporte un premier train épicycloïdal 40, un deuxième train épicycloïdal 50, et un troisième train épicycloïdal 60.

Le premier train épicycloïdal 40 comporte un planétaire 42, un porte-satellites 44, et une couronne 46, le deuxième train épicycloïdal 50 comporte un planétaire 52, un porte-satellites 54, et une couronne 56, et le troisième train épicycloïdal 60 comporte un planétaire 62, un porte-satellites 64, et une couronne 66.

Dans ce premier mode de réalisation, le porte-satellites 44 du premier train épicycloïdal 40, le planétaire 52 du deuxième train épicycloïdal 50 et la couronne 66 du troisième train épicycloïdal 60 sont liés en rotation les uns aux autres et sont liés en rotation directement à l'arbre 13 de sortie du moteur thermique 12, le planétaire 62 du troisième train épicycloïdal 60 est lié en rotation directement à l'arbre 19 de sortie de la deuxième machine électrique 16, et la couronne 46 du premier train épicycloïdal 40, le porte-satellites 54 du deuxième train épicycloïdal 50 et le porte-satellites 64 du troisième train épicycloïdal 60 sont liés en rotation les uns aux autres et sont liés en rotation au pont 18.

Les moyens d'embrayage comportent un premier embrayage 32 qui est susceptible de lier en rotation le planétaire 42 du premier train épicycloïdal 40 à l'arbre de sortie 17 de la première machine électrique 14, et un second embrayage 34 qui est susceptible de lier en rotation la couronne 56 du second train épicycloïdal 50 à l'arbre de sortie 17 de la première machine électrique 14. Les premier embrayage 32 et second embrayage 34 sont pilotés par le module électronique 22 de commande.

Au cours des différents modes de fonctionnement du groupe motopropulseur 10, le moteur thermique est susceptible d'occuper un état "O" dans lequel il est arrêté ou un état "I" dans lequel il est en marche, chaque embrayage 32 ou 34 est susceptible d'occuper un état "O" dans lequel il est débrayé ou un état "I" dans lequel il est embrayé, et chaque machine électrique 14 ou 16 est susceptible d'occuper un état "I_{M}" dans lequel elle fonctionne en moteur électrique, un état "I_{G}" dans lequel elle fonctionne en générateur de courant, et un état "O" dans lequel elle fonctionne à vide, c'est à dire sans fournir ni couple moteur, comme c'est le cas lorsqu'elle fonctionne en moteur électrique dans l'état "I_{M}", ni couple résistant comme c'est le cas lorsqu'elle fonctionne en générateur de courant dans l'état "I_{G}".

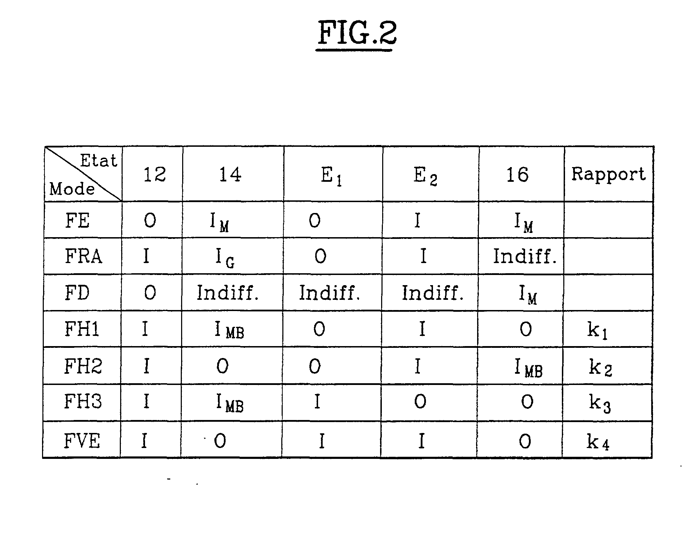

De la sorte, le module électronique 22 de commande est susceptible d'établir différents modes de fonctionnement du groupe motopropulseur 10 qui sont représentés par le tableau de la figure 2.

Dans la configuration représentée à la figure 1, le module 22 électronique de commande est ainsi susceptible de déterminer un mode "FE" de fonctionnement tout électrique du groupe motopropulseur 10, dans lequel le moteur thermique 12 est à l'arrêt selon l'état "O", le premier embrayage 32 est débrayé selon l'état "O", le second embrayage 34 est embrayé selon l'état "I", et les deux machines électriques 14 et 16 fonctionnent en moteur selon l'état "I_{M}", le module 22 électronique de commande régulant le couple fourni par les deux machines électriques 14 et 16. Ce mode de fonctionnement permet avantageusement au véhicule de se mouvoir sans produire d'émissions polluantes.

Le module 22 électronique de commande est aussi susceptible de déterminer un mode "FRA" de rechargement à l'arrêt de la batterie d'accumulateurs dans lequel le moteur thermique 12 est en marche selon l'état "I", le premier embrayage 32 est débrayé selon l'état "O", le second embrayage 34 est embrayé selon l'état "I", et la première machine électrique 14 fonctionne en générateur selon l'état "I_{G}".

Dans ce mode de fonctionnement, le véhicule est arrêté et le pont 18, la couronne 46 du premier train épicycloïdal 40, le porte-satellites 54 du deuxième train épicycloïdal 50 et le porte-satellites 64 du troisième train épicycloïdal 60 sont donc immobiles. De ce fait, le moteur thermique 12 transmet sa puissance motrice au planétaire 52 du deuxième train épicycloïdal 50 qui entraîne, par l'intermédiaire des satellites du deuxième train épicycloïdal 50, la couronne 56 du deuxième train épicycloïdal 50, laquelle entraîne la première machine électrique 14 par l'intermédiaire du second embrayage 34.

Le rechargement de la batterie est indifférent de l'état de fonctionnement la deuxième machine électrique 16, et peut par conséquent être accéléré lorsque le module électronique 22 commande aussi un fonctionnement de celle-ci en générateur de courant selon un état "I_{G}" (non représenté). Dans ce cas, en effet, le moteur thermique 12 transmet aussi sa puissance motrice à la couronne 66 du troisième train épicycloïdal 50 qui entraîne par l'intermédiaire des satellites du troisième train épicycloïdal 60 le planétaire 62 du troisième train épicycloïdal 60, qui entraîne la deuxième machine électrique 16.

Le module 22 de commande est aussi susceptible d'établir un mode de démarrage "FD" du moteur thermique 12 dans lequel, indépendamment de l'état "O" ou "I" des embrayages 32 et 34 et de l'état de la première machine électrique 14, la deuxième machine électrique 16 fonctionne en moteur selon l'état "I_{M}".

Dans ce mode de fonctionnement, que le véhicule soit à l'arrêt ou non, le moteur thermique 12 est arrêté selon un état initial "O" et il est toujours démarré par au moins la deuxième machine électrique 16.

Si le véhicule est à l'arrêt, le pont 18, la couronne 46 du premier train épicycloïdal 40, le porte-satellites 54 du deuxième train épicycloïdal 50 et le porte-satellites 64 du troisième train épicycloïdal 60 sont immobiles. Le moteur thermique 12 est alors démarré par la deuxième machine électrique 16 qui entraîne le planétaire 62 et, de ce fait la couronne 66 du troisième train épicycloïdal 60. La couronne 66 du troisième train épicycloïdal 60 entraîne l'arbre de sortie 13 du moteur thermique 12.

Le moteur thermique 12 peut être de surcroît démarré par la première machine électrique 14. En effet, dans ce cas où le pont 18, la couronne 46 du premier train épicycloïdal 40, le porte-satellites 54 du deuxième train épicycloïdal 50 et le porte-satellites 64 du troisième train épicycloïdal 60 sont immobiles, le module électronique peut alors commander que le premier embrayage 32 soit embrayé selon l'état "I" de façon que le planétaire 42 du premier train épicycloïdal 40 entraîne le porte-satellites 44 du premier train épicycloïdal 40, et donc l'arbre de sortie 13 du moteur thermique 12.

Si le véhicule est en marche, le moteur thermique est seulement démarré par la deuxième machine électrique 16 qui entraîne le planétaire 62 et, de ce fait, la couronne 66 du troisième train épicycloïdal 60 et l'arbre de sortie 13 du moteur thermique 12. Le second embrayage 34 est embrayé selon l'état "I" et la première machine électrique 14 entraîne le véhicule par l'intermédiaire de la couronne 56 du deuxième train épicycloïdal 50 qui est liée en rotation au pont 18.

Le module 22 de commande est aussi susceptible d'établir un premier mode "FH1" de fonctionnement hybride à vitesse réduite dans lequel le moteur thermique 12 est en marche selon l'état "I", le premier embrayage 32 est débrayé selon l'état "O", le second embrayage 34 est embrayé selon l'état "I", la première machine électrique 14 fonctionne en moteur selon l'état "I_{M}" pour bloquer la couronne 56 du deuxième train épicycloïdal 50, et la deuxième machine électrique 16 fonctionne à vide selon l'état "O".

Dans ce mode de fonctionnement, le moteur thermique 12 transmet l'intégralité de sa puissance au pont 18 par l'intermédiaire du deuxième train épicycloïdal 50 dont la couronne 56 est bloquée et dont le porte-satellites 54 entraîne directement le pont 18. La première machine électrique 14 est à l'arrêt et fournit uniquement un couple pour bloquer la couronne 56 du deuxième train épicycloïdal 50 et, de ce fait, ne consomme pas de puissance électrique. La deuxième machine électrique 16, fonctionnant à vide, ne consomme pas non plus de puissance électrique.

Le deuxième train épicycloïdal 50 établit par conséquent un premier rapport de démultiplication k₁ entre la vitesse de rotation du moteur thermique 12 et la vitesse de rotation du pont 18.

Au fur et à mesure que la vitesse du véhicule augmente, dans une première phase intermédiaire (non représentée) le module électronique 22 commande une diminution du couple fourni par la première machine électrique 14 et commande que la deuxième machine électrique 16 fonctionne en moteur électrique de façon que le couple délivré par le moteur thermique 12 transite de plus en plus par le troisième train épicycloïdal 60, et notamment par la couronne 66 et le porte-satellites 64 du troisième train épicycloïdal 50, et de moins en moins par le planétaire 52 et le porte-satellites 54 du deuxième train épicycloïdal 50.

A l'issue de cette phase intermédiaire, le module 22 de commande établi un second mode "FH2" de fonctionnement hybride à vitesse réduite dans lequel le moteur thermique 12 est en marche selon l'état "I", le premier embrayage 32 est débrayé selon l'état "O", le second embrayage 34 est embrayé selon l'état "I", la première machine électrique 14 fonctionne à vide selon l'état "O" sans fournir de couple, et la deuxième machine électrique 16 fonctionne en moteur selon l'état "I_{M}" pour bloquer le planétaire 62 du troisième train épicycloïdal 60.

Dans ce mode de fonctionnement, le moteur thermique 12 transmet l'intégralité de sa puissance au pont 18 par l'intermédiaire du troisième train épicycloïdal 60 dont le planétaire 62 est bloqué et dont le porte-satellites 54 entraîne directement le pont 18. La deuxième machine électrique 16 est à l'arrêt et fournit uniquement un couple pour bloquer le planétaire 62 du troisième train épicycloïdal 60 et, de ce fait, ne consomme pas de puissance électrique. La première machine électrique 14, fonctionnant à vide, ne consomme pas non plus de puissance électrique.

Le troisième train épicycloïdal 60 établit par conséquent un deuxième rapport de démultiplication k₂ entre la vitesse de rotation du moteur thermique 12 et la vitesse de rotation du pont 18.

Au fur et à mesure que la vitesse du véhicule augmente, dans une deuxième phase intermédiaire (non représentée) le module électronique 22 commande une diminution du couple fourni par la deuxième machine électrique 16 et commande que la première machine électrique 14 fonctionne à nouveau en moteur électrique, en bloquant la couronne 56 du deuxième train épicycloïdal 50 de façon que le couple fourni par le moteur thermique 12 transite de plus en plus par le deuxième train épicycloïdal 50, et notamment par le planétaire 52 et le porte-satellites 54 du deuxième train épicycloïdal 50.

Lorsque la vitesse de rotation du porte-satellites 54 du deuxième train épicycloïdal 50 a atteint une valeur déterminée de synchronisation, le module 22 électronique commande le débrayage du second embrayage 34 et l'embrayage du premier embrayage 32.

Le module 22 électronique détermine alors un mode de fonctionnement "FH3" hybride à vitesse intermédiaire dans lequel le moteur thermique 12 est en marche selon l'état "I", le premier embrayage 32 est embrayé selon l'état "I", le second embrayage 34 est débrayé selon l'état "O", la première machine électrique 14 fonctionne en moteur selon l'état "I_{M}" pour bloquer le planétaire 42 du premier train épicycloïdal 40, et la deuxième machine électrique 16 fonctionne à vide selon l'état "O".

Dans ce mode de fonctionnement, le moteur thermique 12 transmet l'intégralité de sa puissance au pont 18 par l'intermédiaire du premier train épicycloïdal 40 dont le planétaire 42 est bloqué et dont la couronne 46 entraîne directement le pont 18. La première machine électrique 14 est à l'arrêt et fournit uniquement un couple pour bloquer le planétaire 42 du premier train épicycloïdal 60 et, de ce fait, ne consomme pas de puissance électrique. La deuxième machine électrique 16, fonctionnant à nouveau à vide, ne consomme pas non plus de puissance électrique.

Le premier train épicycloïdal 40 établit par conséquent un troisième rapport de démultiplication k₃ entre la vitesse de rotation du moteur thermique 12 et la vitesse de rotation du pont 18.

Le module 22 électronique est ainsi susceptible de déterminer les trois modes de fonctionnement FH1, FH2, et FH3 associés aux trois rapports k₁, k₂, k₃ de démultiplication entre la vitesse de rotation du moteur thermique 12 et la vitesse de rotation du pont 18. En ce sens, le module électronique 22 est donc à même de déterminer le rapport le mieux approprié à la vitesse du véhicule, d'une façon analogue à un calculateur d'une boîte de vitesses automatique conventionnelle.

A l'issue de ces trois modes de fonctionnement hybrides, le module 22 électronique est susceptible de déterminer un mode de fonctionnement "FVE" à vitesse élevée dans lequel le moteur thermique 12 est en marche selon l'état "I", les deux embrayages 32 et 34 sont embrayés selon l'état "I", et les deux machines électriques 14 et 16 fonctionnent à vide selon l'état "O".

Ce mode de fonctionnement correspond à un fonctionnement conventionnel d'un véhicule à motorisation thermique et permet, de par la loi de composition des vitesses dans les trains épicycloïdaux 40, 50 et 60, de bloquer tous les éléments des trois trains épicycloïdaux 40, 50, 60.

Les trois trains épicycloïdaux 40, 50, et 60 établissent par conséquent un quatrième rapport de démultiplication k₄, dit rapport de "de prise directe", entre la vitesse de rotation du moteur thermique 12 et la vitesse de rotation du pont 18.

Il sera compris que, en addition à ces modes de fonctionnement "FH1", "FH2", "FH3", "FVE" dans lesquels la puissance motrice est fournie seulement par le moteur thermique 12 aux roues 20 du véhicule et chemine de différentes façons dans les éléments des trains épicycloïdaux 40, 50 et 60, il est possible d'envisager des modes de fonctionnement hybrides conventionnels dans lesquels les première machine électrique 14 et/ou la deuxième machine électrique 16 fournissent une puissance motrice aux roues 20 du véhicule. En particulier, ces modes de fonctionnement hybrides conventionnels permettent une dérivation de la puissance motrice du moteur thermique 12 d'une machine électrique 14 ou 16 vers l'autre, l'une fonctionnant en générateur et l'autre en moteur, pour adapter au mieux le point de fonctionnement du moteur thermique 12.

Ces modes de fonctionnement ne seront toutefois pas explicités plus en détail dans la présente description.

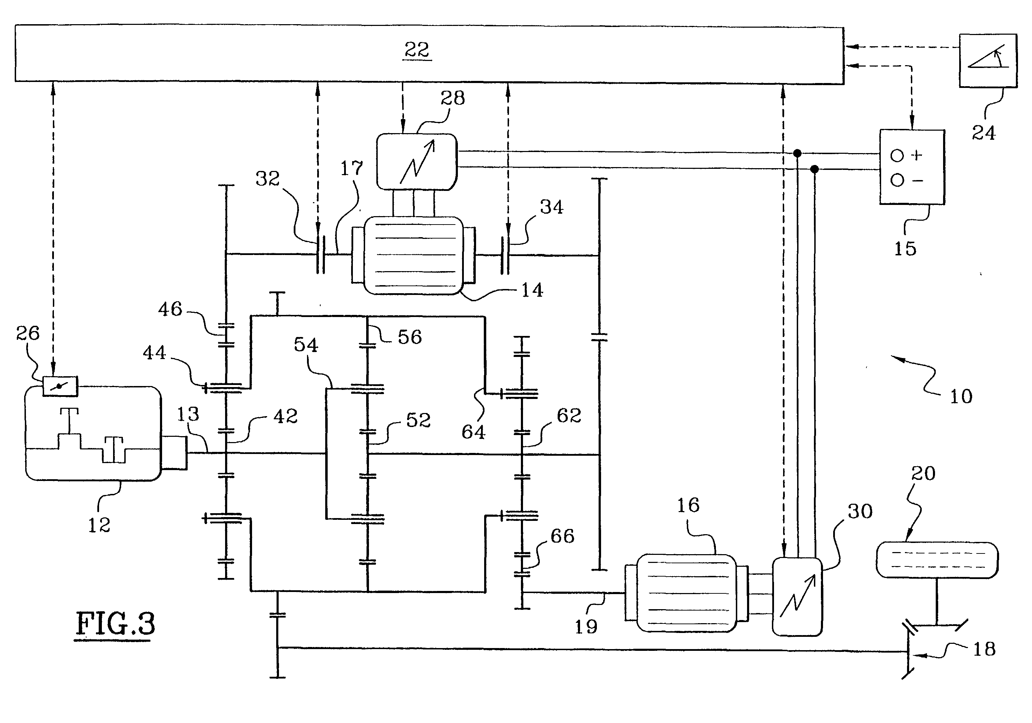

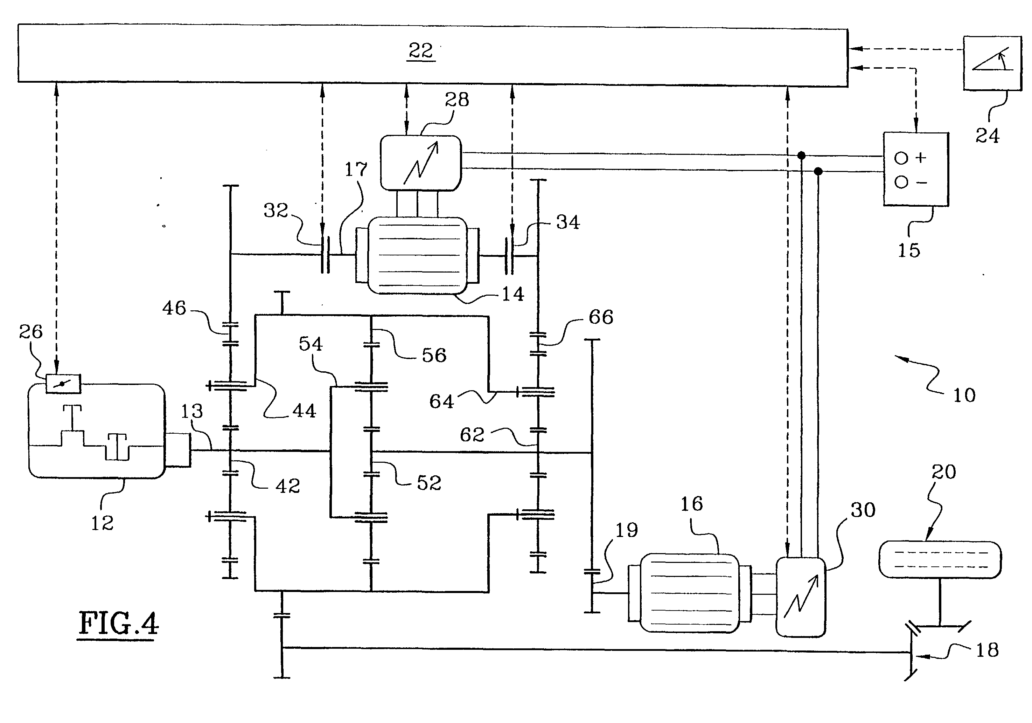

Les figures 3 et 4 illustrent un deuxième mode et un troisième mode de réalisation de l'invention. Dans ces modes de réalisation, le planétaire 42 du premier train épicycloïdal 40 et le porte-satellites 54 du deuxième train épicycloïdal 50 sont liés en rotation l'un à l'autre et sont liés en rotation à l'arbre 13 de sortie du moteur thermique 12, les planétaires 52 et 62 des deuxième 50 et troisième 60 trains épicycloïdaux sont liés en rotation l'un à l'autre, et le porte-satellites 44 du premier train épicycloïdal 40, la couronne 56 du deuxième train épicycloïdal 50, et le porte-satellites 66 du troisième train épicycloïdal 60 sont liés en rotation les uns aux autres et sont liés en rotation au pont.

L'arbre de sortie de la première machine électrique 14 est un arbre double qui porte, de part et d'autre de la première machine électrique 14, un premier embrayage 32 et un deuxième embrayage 34.

Dans le deuxième mode de réalisation représenté à la figure 3, la couronne 46 du premier train épicycloïdal 40 est susceptible d'être liée en rotation à la première machine électrique 14 par l'intermédiaire du premier embrayage 32, le planétaire 62 du troisième train épicycloïdal 60 est susceptible d'être lié en rotation à la première machine électrique 14 par l'intermédiaire du second embrayage 34, et la couronne 66 du troisième train épicycloïdal 60 est liée en rotation à la deuxième machine électrique 16.

Dans le troisième mode de réalisation de l'invention représenté à la figure 4, la couronne 46 du premier train épicycloïdal 40 est aussi susceptible d'être liée en rotation à la première machine électrique 14 par l'intermédiaire du premier embrayage 32, mais la couronne 66 du troisième train épicycloïdal 60 est susceptible d'être liée en rotation à la première machine électrique 14 par l'intermédiaire du second embrayage 34, et le planétaire 62 du troisième train épicycloïdal 60 est lié en rotation à la deuxième machine électrique 16.

Le principe de fonctionnement et de commande du groupe motopropulseur 10 par le module électronique 22 est similaire au premier mode de réalisation de l'invention, mais les accouplements différents des trains épicycloïdaux 40, 50 et 60 permettent d'obtenir, en fonction des différents modes de fonctionnement, des rapports de démultiplication différents entre la vitesse de rotation du moteur thermique 12 et la vitesse de rotation du pont 18 et des roues 20.

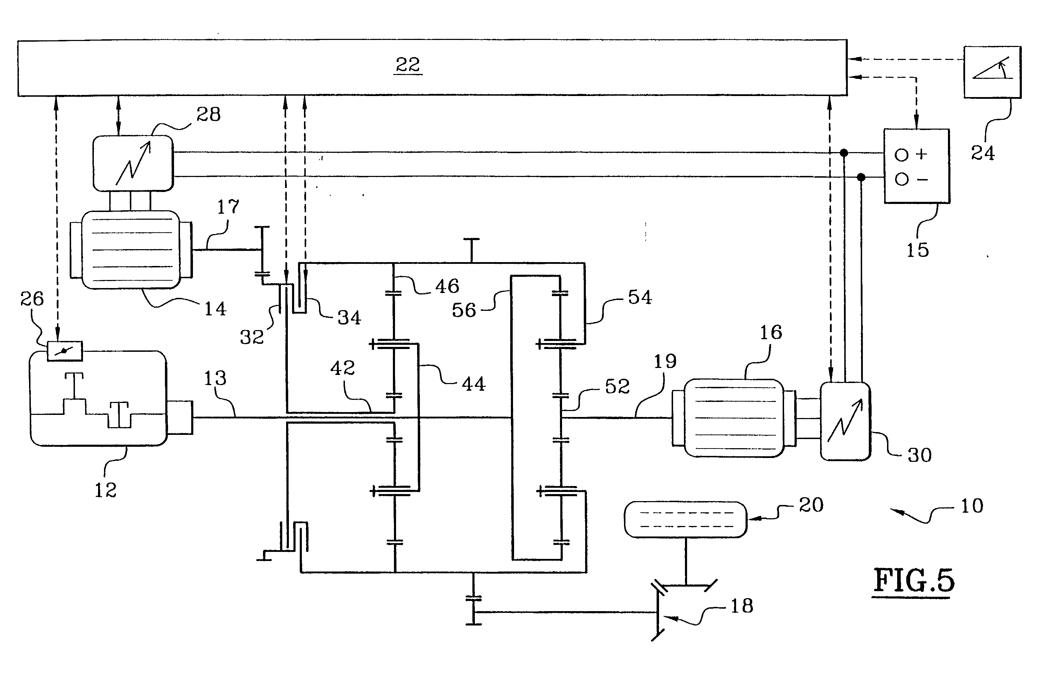

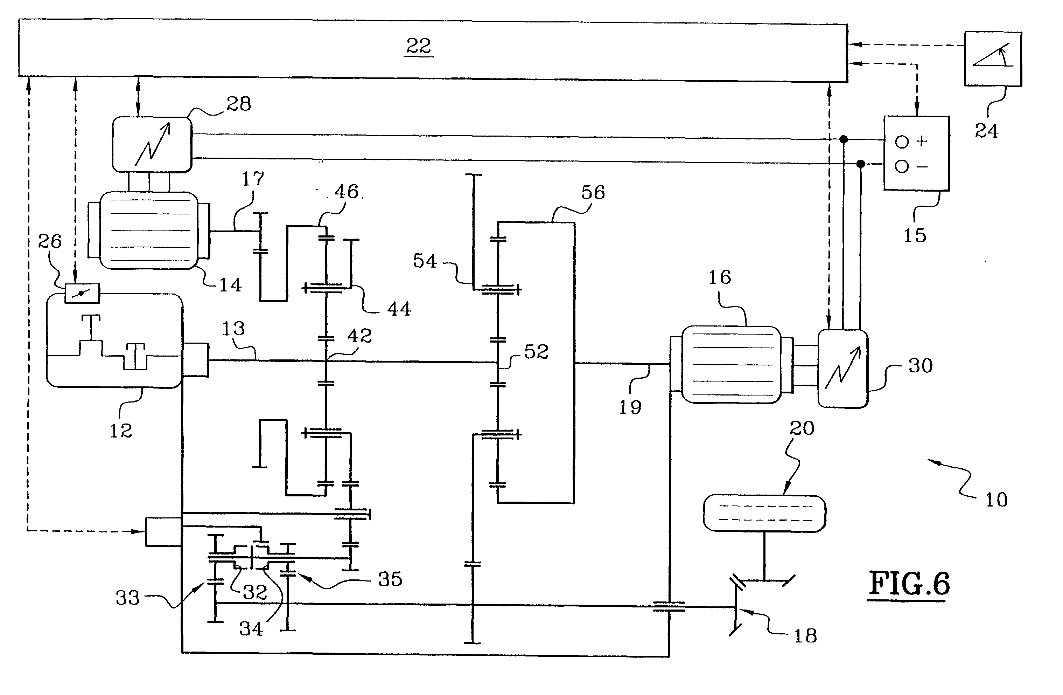

Conformément à une variante de l'invention représentée selon deux modes de réalisation différents en référence aux figures 5 et 6, le groupe motopropulseur 10 peut aussi comporter seulement un premier train épicycloïdal 40 et un second train 50 épicycloïdal.

Dans le quatrième mode de réalisation représenté à la figure 5, le porte-satellites 44 du premier train épicycloïdal 40 et la couronne 56 du second train épicycloïdal 50 sont liés en rotation l'un à l'autre et sont liés en rotation directement à l'arbre de sortie 13 du moteur thermique 12, le planétaire 52 du second train épicycloïdal 50 est lié en rotation directement à l'arbre de sortie 19 de la deuxième machine électrique 16, le planétaire 42 du premier train épicycloïdal 40 est susceptible d'être lié en rotation à la première machine électrique 14 par l'intermédiaire d'un premier embrayage 32, et la couronne 46 du premier train épicycloïdal 40 et le porte-satellites 54 du second train épicycloïdal 50 sont liés en rotation l'un à l'autre, sont liés en rotation au pont 18, et sont susceptibles d'être liés en rotation à la première machine électrique 14 par l'intermédiaire d'un second embrayage 34.

Dans ce mode de réalisation, le module 22 électronique présente la particularité, à vitesse réduite, de commander l'embrayage 32 de façon que le couple du moteur thermique soit transmis directement au pont 18 et aux roues 20 du véhicule.

Dans le cinquième mode de réalisation représenté à la figure 6 les planétaires 42 et 52 des premier 40 et second 50 trains épicycloïdaux sont liés en rotation l'un à l'autre et sont liés en rotation directement à l'arbre de sortie 13 du moteur thermique 12, les couronnes 46 et 56 respectives des premier 40 et second 50 trains épicycloïdaux sont respectivement liées en rotation aux première machine électrique 14 et deuxième machine électrique 16, le porte-satellites 54 du second train épicycloïdal 50 est lié en rotation au pont 18, et que le porte-satellites 44 du premier train épicycloïdal 40 est susceptible d'être lié en rotation au pont 18 sélectivement par l'intermédiaire de l'un ou l'autre d'un premier embrayage 32 et d'un second embrayage 34 associés chacun à un engrenage respectif 33 ou 35 de rapport de démultiplication différent.

Dans ce cinquième mode de réalisation, le principe de commande du module 22 électronique de commande est analogue à celui des modules 22 électroniques des modes de réalisation décrits précédemment, mais, au lieu de débrayer la première machine électrique 14 d'un des trains épicycloïdaux 40 ou 50 pour la connecter à l'autre, comme c'est le cas pour le premier mode de réalisation décrit en référence à la figure 1, le module 22 électronique commande alternativement la transmission de puissance motrice par l'un ou l'autre des engrenages 33 et 35, en embrayant un des embrayages 32 et 34 et en débrayant l'autre, ce qui permet de disposer de deux rapports de démultiplication différents entre la vitesse de rotation du moteur thermique 12 et la vitesse de rotation du pont 18, chaque rapport étant associé à un des engrenages 33 et 35 sélectionné.

Ainsi, le groupe motopropulseur 10 selon l'invention permet de limiter les transferts de puissance électrique entre les deux machines électriques 14 et 16, tout en disposant d'une architecture de groupe motopropulseur 10 pouvant fonctionner indifféremment avec une énergie électrique, hybride, ou thermique.

## Revendications

1. Groupe motopropulseur (10) pour un véhicule automobile à motorisation hybride fonctionnant selon plusieurs modes (FE, FRA, FD, FH1, FH2, FH3, FVE) du type qui comporte au moins deux trains épicycloïdaux (40, 50, 60) comportant chacun des éléments tels qu'une couronne (42, 52,62), un planétaire (44, 54, 64), et un porte-satellites (46, 56, 66) qui sont susceptibles d'être liés en rotation à des organes du groupe motopropulseur, notamment à un arbre de sortie (17) d'une première machine électrique (14) et à un arbre de sortie (19) d'une deuxième machine électrique (16) qui sont susceptibles chacune de fonctionner en moteur ou en générateur, à un arbre de sortie (13) d'un moteur thermique (12), et à un pont (18) destiné à transmettre sans discontinuité une puissance motrice à des roues (20) du véhicule, la deuxième machine électrique (16) étant liée en permanence à un élément d'un train épicycloïdal, **caractérisé en ce qu'**un élément (42, 44, 46) d'un premier train épicycloïdal (40) et un élément (52, 54, 56) d'un second train épicycloïdal sont liés en rotation l'un à l'autre et sont reliés directement à l'arbre de sortie du moteur et **en ce qu'**il comporte des moyens d'embrayage (32, 34) d'un desdits organes électriques (14, 16) du groupe motopropulseur (10) avec des éléments de chacun des deux trains épicyloïdaux (40, 50, 60).

2. Groupe motopropulseur (10) selon la revendication précédente, **caractérisé en ce qu'**il comporte des moyens (22) électroniques de commande du moteur thermique (12), des deux machines électriques (14, 16) et des moyens d'embrayage (32, 34).

3. Groupe motopropulseur (10) selon l'une quelconque des revendications précédentes, **caractérisé en ce qu'**il comporte un premier (40) et un second (50) trains épicycloïdaux.

4. Groupe motopropulseur (10) selon la revendication précédente, **caractérisé en ce que** le porte-satellites (44) du premier train épicycloïdal (40) et la couronne (56) du second train épicycloïdal (50) sont liés en rotation l'un à l'autre et sont liés en rotation directement à l'arbre de sortie (13) du moteur thermique (12), **en ce que** le planétaire (52) du second train épicycloïdal (50) est lié en rotation directement à l'arbre de sortie (19) de la deuxième machine électrique (16), **en ce que** le planétaire (42) du premier train épicycloïdal (40) est susceptible d'être lié en rotation à la première machine électrique (14) par l'intermédiaire d'un premier embrayage (32), et **en ce que** la couronne (46) du premier train épicycloïdal (40) et le porte-satellites (54) du second train épicycloïdal (50) sont liés en rotation l'un à l'autre, sont liés en rotation au pont (18), et sont susceptibles d'être liés en rotation à la première machine électrique (14) par l'intermédiaire d'un second embrayage (34).

5. Groupe motopropulseur (10) selon la revendication 3, **caractérisé en ce que** les planétaires (42, 52) des premier (40) et second (50) trains épicycloïdaux sont liés en rotation l'un à l'autre et sont liés en rotation directement à l'arbre de sortie (13) du moteur thermique (12), **en ce que** les couronnes (46, 56) des premier (40) et second (50) trains épicycloïdaux sont respectivement liées en rotation aux première (14) et deuxième (16) machines électriques, **en ce que** le porte-satellites (54) du second train épicycloïdal (50) est lié en rotation au pont (18), et **en ce que** le porte-satellites (44) du premier train épicycloïdal (40) est susceptible d'être lié en rotation au pont (18) sélectivement par l'intermédiaire de l'un ou l'autre d'un premier (32) et d'un second (34) embrayage associés chacun à un engrenage (33, 35) de rapport de démultiplication différent.

6. Groupe motopropulseur (10) selon l'une quelconque des revendications 1 ou 2, **caractérisé en ce qu'**il comporte un premier (40), un deuxième (50) et un troisième (60) trains épicycloïdaux.

7. Groupe motopropulseur (10) selon la revendication précédente, **caractérisé en ce que** le porte-satellites (44) du premier train épicycloïdal (40), le planétaire (52) du deuxième train épicycloïdal (50) et la couronne (66) du troisième train épicycloïdal (60) sont liés en rotation les uns aux autres et sont liés en rotation directement à l'arbre de sortie (13) du moteur thermique (12), **en ce que** le planétaire (62) du troisième train épicycloïdal (60) est lié en rotation directement à l'arbre de sortie (19) de la deuxième machine électrique (16), **en ce que** le planétaire (42) du premier train épicycloïdal (40) est susceptible d'être lié en rotation à la première machine électrique (14) par l'intermédiaire d'un premier embrayage (32), **en ce que** la couronne (56) du second train épicycloïdal (50) est susceptible d'être liée en rotation à la première machine électrique (14) par l'intermédiaire d'un second embrayage (34), et **en ce que** la couronne (46) du premier train épicycloïdal (40), le porte-satellites (54) du deuxième train épicycloïdal (50) et le porte-satellites (64) du troisième train épicycloïdal (60) sont liés en rotation les uns aux autres et sont liés en rotation au pont (18).

8. Groupe motopropulseur (10) selon la revendication précédente, **caractérisé en ce que** les moyens électroniques (22) de commande du moteur thermique (12), des deux machines électriques (14, 16) et des deux embrayages (32, 34) établissent au moins:
- un mode (FE) de fonctionnement tout électrique du groupe motopropulseur (10), dans lequel le moteur thermique (12) est à l'arrêt, le premier embrayage (32) est débrayé, le second embrayage (34) est embrayé, et les deux machines électriques (14, 16) fonctionnent en moteur, les moyens électroniques (22) de commande régulant le couple fourni par les deux machines électriques (14, 16),
- un mode (FRA) de rechargement à l'arrêt dans lequel le moteur thermique (12) est en marche, le premier embrayage (32) est débrayé, le second embrayage (34) est embrayé, et la première machine électrique (14) fonctionne en générateur,
- un mode de démarrage (FD) du moteur thermique (12) dans lequel, indépendamment de l'état des premier (32) et second (34) embrayages et de la première machine électrique (14), la deuxième machine électrique (16) fonctionne en moteur,
- un premier mode (FH1) de fonctionnement hybride à vitesse réduite dans lequel le moteur thermique (12) est en marche, le premier embrayage (32) est débrayé, le second embrayage (34) est embrayé, la première machine électrique (14) fonctionne en moteur pour bloquer la couronne (56) du deuxième train épicycloïdal (50), et la deuxième machine électrique (16) fonctionne à vide,
- un second mode (FH2) de fonctionnement hybride à vitesse réduite dans lequel le moteur thermique (12) est en marche, le premier embrayage (32) est débrayé, le second embrayage (34) est embrayé, la première machine électrique (14) fonctionne à vide, et la deuxième machine électrique (16) fonctionne en moteur pour bloquer le planétaire (62) du troisième train épicycloïdal (60),
- un mode (FH3) de fonctionnement hybride à vitesse intermédiaire dans lequel le moteur thermique (12) est en marche, le premier embrayage (32) est embrayé, le second embrayage (34) est débrayé, la première machine électrique (14) fonctionne en moteur pour bloquer le planétaire (42) du premier train épicycloïdal (40), et la deuxième machine électrique (16) fonctionne à vide,
- un mode (FVE) de fonctionnement à vitesse élevée dans lequel le moteur thermique (12) est en marche, les deux embrayages (32, 34) sont embrayés, et les deux machines électriques (14, 16) fonctionnent à vide.

9. Groupe motopropulseur (10) selon la revendication 6, **caractérisé en ce que en ce que** la couronne (46) du premier train épicycloïdal (40) est susceptible d'être liée en rotation à la première machine électrique (14) par l'intermédiaire d'un premier embrayage (32), **en ce que** le planétaire (42) du premier train épicycloïdal (40) et le porte-satellites (54) du deuxième train épicycloïdal (50) sont liés en rotation l'un à l'autre et sont liés en rotation à l'arbre de sortie (13) du moteur thermique (12), **en ce que** les planétaires (52, 62) des deuxième (50) et troisième (60) trains épicycloïdaux sont liés en rotation l'un à l'autre, et **en ce que** le porte-satellites (44) du premier train épicycloïdal (40), la couronne (56) du deuxième train épicycloïdal (50), et le porte-satellites (64) du troisième train épicycloïdal (60) sont liés en rotation les uns aux autres et sont liés en rotation au pont (18).

10. Groupe motopropulseur (10) selon la revendication 9, **caractérisé en ce que** le planétaire (62) du troisième train épicycloïdal (60) est susceptible d'être lié en rotation à la première machine électrique (14) par l'intermédiaire d'un second embrayage (34), et **en ce que** la couronne (66) du troisième train épicycloïdal (60) est liée en rotation à la deuxième machine électrique (16).

11. Groupe motopropulseur (10) selon la revendication 9, **caractérisé en ce que** la couronne (66) du troisième train épicycloïdal (60) est susceptible d'être liée en rotation à la première machine électrique (14) par l'intermédiaire d'un second embrayage (34), et **en ce que** le planétaire (62) du troisième train épicycloïdal (60) est lié en rotation à la deuxième machine électrique (16).

## Patentansprüche

1. Antriebsgruppe (10) für ein Kraftfahrzeug mit Hybridmotorisierung, welche gemäß mehrere Modi (FE, FRA, FD, FH1, FH2, FH3, FVE) funktioniert von dem Typ, welcher mindestens zwei Umlaufgetriebe (40, 50, 60) aufweist, von welchen jedes Elemente, wie z.B. einen Zahnkranz (42, 52, 62), ein Zentralrad (44, 54, 64) und einen Planetenträger (46, 56, 66) aufweist, welche fähig sind, in Drehung mit Bauteilen der Antriebsgruppe verbunden zu werden, insbesondere mit einer Antriebswelle (17) einer ersten elektrischen Maschine (14) und mit einer Antriebswelle (19) einer zweiten elektrischen Maschine (16), welche jede fähig sind, als Motor oder als Generator betrieben zu werden, mit einer Antriebswelle (13) eines Verbrennungsmotors (12) und mit einer Brücke (18), die dafür bestimmt ist, ohne Diskontinuität eine Antriebsleistung an Räder (20) des Fahrzeugs zu übertragen, wobei die zweite elektrische Maschine (16) permanent mit einem Element eines Umlaufgetriebes verbunden ist, **dadurch gekennzeichnet, dass** ein Element (42, 44, 46) eines ersten Umlaufgetriebes (40) und ein Element (52, 54, 56) eines zweiten Umlaufgetriebes in Drehung miteinander verbunden sind und direkt mit der Antriebswelle des Motors verbunden sind, und dass er Kupplungsmittel (32, 34) der elektrischen Bauteile (14, 16) der Antriebsgruppe (10) mit Elementen von jedem der Umlaufgetriebe (40, 50, 60) aufweist.

2. Antriebsgruppe (10) gemäß dem vorangegangen Anspruch, **dadurch gekennzeichnet, dass** es elektronische Steuermittel (22) des Verbrennungsmotors (12), der zwei elektrischen Maschinen (14, 16) und der Kupplungsmittel (32, 34) aufweist.

3. Antriebsgruppe (10) gemäß irgendeinem der vorangegangenen Ansprüche, **dadurch gekennzeichnet, dass** sie ein erstes (40) und ein zweites (50) Umlaufgetriebe bzw. Planetengetriebe aufweist.

4. Antriebsgruppe (10) gemäß dem vorangegangenen Anspruch, **dadurch gekennzeichnet, dass** der Planetenträger (44) des ersten Umlaufgetriebes (40) und der Zahnkranz (56) des zweiten Umlaufgetriebes (50) in Drehung miteinander verbunden sind, und in Drehung direkt mit der Antriebswelle (13) des Verbrennungsmotors (12) verbunden sind, dass das Zentralrad (52) des zweiten Umlaufgetriebes (50) direkt in Drehung mit der Antriebswelle (19) der zweiten elektrischen Maschine (16) verbunden ist, dass das Zentralrad (42) des ersten Umlaufgetriebes (40) fähig ist, in Drehung mit der ersten elektrischen Maschine (14) über eine erste Kupplung (32) verbunden zu werden, und dass der Zahnkranz (46) des ersten Umlaufgetriebes (40) und der Planetenträger (54) des zweiten Umlaufgetriebes (50) in Drehung miteinander verbunden sind, in Drehung mit der Brücke (18) verbunden sind und fähig sind, in Drehung mit der ersten elektrischen Maschine (14) über eine zweite Kupplung (34) verbunden zu werden.

5. Antriebsgruppe (10) gemäß Anspruch 3, **dadurch gekennzeichnet, dass** die Zentralräder (42, 52) des ersten (40) und zweiten (50) Umlaufgetriebes in Drehung miteinander verbunden sind und in Drehung direkt mit der Antriebswelle (13) des Verbrennungsmotors (12) verbunden sind, dass die Zahnkränze (46, 56) des ersten (40) und zweiten (50) Umlaufgetriebes jeweils in Drehung mit ersten (14) und zweiten (16) elektrischen Maschinen verbunden sind, dass der Planetenträger (54) des zweiten Umlaufgetriebes (50) in Drehung mit der Brücke (18) verbunden ist, und dass der Planetenträger (44) des ersten Umlaufgetriebes (40) fähig ist, in Drehung mit der Brücke (18) selektiv über die eine oder die andere von einer ersten (32) und einer zweiten (34) Kupplung verbunden zu werden, welche jede zu einem Getriebe (33, 35) mit einem unterschiedlichen Untersetzungsverhältnis gehört.

6. Antriebsgruppe (10) gemäß irgendeinem der Ansprüche 1 oder 2, **dadurch gekennzeichnet, dass** sie ein erstes (40), ein zweites (50) und ein drittes (60) Umlaufgetriebe aufweist.

7. Antriebsgruppe (10) gemäß dem vorangegangenen Anspruch, **dadurch gekennzeichnet, dass** der Planetenträger (44) des ersten Umlaufgetriebes (40), das Zentralrad (52) des zweiten Umlaufgetriebes (50) und der Zahnkranz (66) des dritten Umlaufgetriebes (60) in Drehung miteinander verbunden sind und in Drehung direkt mit der Antriebswelle (13) des Verbrennungsmotors (12) verbunden sind, dass das Zentralrad (62) des dritten Umlaufgetriebes (60) direkt in Drehung mit der Antriebswelle (19) der zweiten elektrischen Maschine (16) verbunden ist, dass das Zentralrad (42) des ersten Umlaufgetriebes (40) fähig ist, in Drehung mit der ersten elektrischen Maschine (14) über eine erste Kupplung (32) verbunden zu werden, dass der Zahnkranz (56) des zweiten Umlaufgetriebes (50) fähig ist, in Drehung mit der ersten elektrischen Maschine (14) über eine zweite Kupplung (34) verbunden zu werden, und dass der Zahnkranz (46) des ersten Umlaufgetriebes (40), der Planetenträger (54) des zweiten Umlaufgetriebes (50) und der Planetenträger (64) des dritten Umlaufgetriebes (60) in Drehung miteinander verbunden sind und in Drehung mit der Brücke (18) verbunden sind.

8. Antriebsgruppe (10) gemäß dem vorangegangenen Anspruch, **dadurch gekennzeichnet, dass** die elektronischen Steuermittel (22) des Verbrennungsmotors (12), der zwei elektrischen Maschinen (14, 16) und der zwei Kupplungen (32, 34) mindestens bereitstellen:
- einen vollständig elektrischen Betriebsmodus (FE) der Antriebsgruppe (10), in welchem der Verbrennungsmotor (12) in Stillstand ist, die erste Kupplung (32) ausgekuppelt ist, die zweite Kupplung (34) eingekuppelt ist und die zwei elektrischen Maschinen (14, 16) als Motor betrieben werden, wobei die elektronischen Steuermittel (22) das Moment steuern, welches durch die zwei elektrischen Maschinen (14, 16) geliefert wird,
- einen Auflademodus (FRA) im Stillstand, in welchem der Verbrennungsmotor (12) läuft, die erste Kupplung (32) ausgekuppelt ist, die zweite Kupplung (34) eingekuppelt ist und die erste elektrische Maschine (14) als Generator betrieben wird,
- einen Startmodus (FD) des Verbrennungsmotors (12), in welchem, unabhängig vom Zustand der ersten (32) und zweiten (34) Kupplung und der ersten elektrischen Maschine (14) die zweite elektrische Maschine (16) als Motor betrieben wird,
- einem ersten Modus (FH1) eines Hybridbetriebs mit reduzierter Geschwindigkeit, in welchem der Verbrennungsmotor (12) läuft, die erste Kupplung (32) ausgekuppelt ist, die zweite Kupplung (34) eingekuppelt ist, die erste elektrische Maschine (14) als Motor betrieben wird, um den Zahnkranz (56) des zweiten Umlaufgetriebes (50) zu blockieren, und die zweite elektrische Maschine (16) unbelastet betrieben wird,
- ein zweiter Hybridbetriebsmodus (FH2) mit reduzierter Geschwindigkeit, in welchem der Verbrennungsmotor (12) läuft, die erste Kupplung (32) ausgekuppelt ist, die zweite Kupplung (34) eingekuppelt ist, die erste elektrische Maschine (14) unbelastet betrieben wird und die zweite elektrische Maschine (16) als Motor betrieben wird, um das Zentralrad (62) des dritten Umlaufgetriebes (60) zu blockieren,
- ein Hybridbetriebsmodus (FH3) mit Zwischen-Geschwindigkeit, in welchem der Verbrennungsmotor (12) läuft, die erste Kupplung (32) eingekuppelt ist, die zweite Kupplung (34) ausgekuppelt ist, die erste elektrische Maschine (14) als Motor betrieben wird, um das Zentralrad (42) des ersten Umlaufgetriebes (40) zu blockieren, und die zweite elektrische Maschine (16) unbelastet betrieben wird,
- ein Betriebsmodus (FVE) mit erhöhter Geschwindigkeit, in welchem der Verbrennungsmotor (12) läuft, die zwei Kupplungen (32, 34) eingekuppelt sind und die zwei elektrischen Maschinen (14, 16) unbelastet betrieben werden.

9. Antriebsgruppe (10) gemäß Anspruch 6, **dadurch gekennzeichnet, dass** der Zahnkranz (46) des ersten Umlaufgetriebes (40) fähig ist, in Drehung mit der ersten elektrischen Maschine (14) über eine erste Kupplung (32) verbunden zu werden, dass das Zentralrad (42) des ersten Umlaufgetriebes (40) und der Planetenträger (54) des zweiten Umlaufgetriebes (50) in Drehung miteinander verbunden sind und in Drehung mit der Antriebswelle (13) des Verbrennungsmotors (12) verbunden sind, dass die. Zentralräder (52, 62) des zweiten (50) und dritten (60) Umlaufgetriebes in Drehung miteinander verbunden sind, und dass der Planetenträger (44) des ersten Umlaufgetriebes (40), der Zahnkranz (56) des zweiten Umlaufgetriebes (50) und der Planetenträger (64) des dritten Umlaufgetriebes (60) in Drehung miteinander verbunden sind und in Drehung mit der Brücke (18) verbunden sind.

10. Antriebsgruppe (10) gemäß Anspruch 9, **dadurch gekennzeichnet, dass** das Zentralrad (62) des dritten Umlaufgetriebes (60) fähig ist, in Drehung mit der ersten elektrischen Maschine (14) über eine zweite Kupplung (34) verbunden zu werden, und dass der Zahnkranz (66) des dritten Umlaufgetriebes (60) in Drehung mit der zweiten elektrischen Maschine (16) verbunden ist.

11. Antriebsgruppe (10) gemäß Anspruch 9, **dadurch gekennzeichnet, dass** der Zahnkranz (66) des dritten Umlaufgetriebes (60) fähig ist, in Drehung mit der ersten elektrischen Maschine (14) über eine zweite Kupplung (34) verbunden zu werden, und dass das Zentralrad (62) des dritten Umlaufgetriebes (60) in Drehung mit der zweiten elektrischen Maschine (16) verbunden ist.

## Claims

1. Engine-gearbox unit (10) for a motor vehicle with a hybrid engine, operating in several modes (FE, FRA, FD, FH1, FH2, FH3 and FVE), of the type comprising at least two planetary gear trains (40, 50, 60) each comprising components such as a sun gear (42, 52, 62), a planetary pinion (44, 54, 64) and a pinion carrier (46, 56, 66) that are able to be rotatably connected to components of the engine-gearbox unit, particularly an output shaft (17) of a first electric machine (14) and an output shaft (19) of a second electric machine (16), which are each able to operate either as a motor or a generator, an output shaft (13) of a combustion engine (12) and an axle (18) designed to transmit uninterrupted driving power to wheels (20) on the vehicle, the second electric machine (16) being permanently connected to a component of a planetary gear train, **characterised in that** a component (42, 44, 46) of a first planetary gear train (40) and a component (52, 54, 56) of a second planetary gear train are rotatably connected to each other and are directly connected to the output shaft of the engine and **in that** it comprises means (32, 34) of engaging one of the aforementioned electric components (14, 16) of the engine-gearbox unit (10) with components on each of the two planetary gear trains (40, 50, 60).

2. Engine-gearbox unit (10) according to the previous claim, **characterised in that** it comprises electronic controls (22) for the combustion engine (12), the two electric machines (14, 16) and the means of engagement (32, 34).

3. Engine-gearbox unit (10) according to any one of the previous claims, **characterised in that** it comprises first (40) and second (50) planetary gear trains.

4. Engine-gearbox unit (10) according to the previous claim, **characterised in that** the pinion carrier (44) on the first planetary gear train (40) and the sun gear (56) on the second planetary gear train (50) are rotatably connected to each ether and are directly rotatably connected to the output shaft (13) of the combustion engine (12), the planetary pinion (52) on the second planetary gear train (50) is directly rotatably connected to the output shaft (19) of the second electric machine (16), the planetary pinion (42) on the first planetary gear train (40) is able to be rotatably connected to the first electric machine (14) by means of a first clutch (32), and the sun gear (46) on the first planetary gear train (40) and the pinion carrier (54) on the second planetary gear train (50) are rotatably connected to each other, rotatably connected to the axle (18), and able to be rotatably connected to the first electric machine (14) by means of a second clutch (34).

5. Engine-gearbox unit (10) according to claim 3, **characterised in that** the planetary pinions (42, 52) on the first (40) and second (50) planetary gear trains are rotatably connected to each other and are directly rotatably connected to the output shaft (13) of the combustion engine (12), the sun gears (46, 56) on the first (40) and second (50) planetary gear trains are respectively rotatably connected to the first (14) and second (16) electric machines, the pinion carrier (54) on the second planetary gear train (50) is rotatably connected to the axle (18), and the pinion carrier (44) on the first planetary gear train (40) is able to be selectively rotatably connected to the axle (18) by means of either a first (32) or second (34) clutch each associated with a gear (33, 35) with a different reduction ratio.

6. Engine-gearbox unit (10) according to either claim 1 or 2, **characterised in that** it comprises first (40), second (50) and third (60) planetary gear trains.

7. Engine-gearbox unit (10) according to the previous claim, **characterised in that** the pinion carrier (44) on the first planetary gear train (40), the planetary pinion (52) on the second planetary gear train (50) and the sun gear (66) on the third planetary gear train (60) are rotatably connected to each other and are directly rotatably connected to the output shaft (13) of the combustion engine (12), the planetary pinion (62) on the third planetary gear train (60) is directly rotatably connected to the output shaft (19) of the second electric machine (16), the planetary pinion (42) on the first planetary gear train (40) is able to be rotatably connected to the first electric machine (14) by means of a first clutch (32), the sun gear (56) on the second planetary gear train (50) is able to be rotatably connected to the first electric machine (14) by means of a second clutch (34), and the sun gear (46) on the first planetary gear train (40), the pinion carrier (54) on the second planetary gear train (50) and the pinion carrier (64) on the third planetary gear train (60) are rotatably connected to each other and are rotatably connected to the axle (18).

8. Engine-gearbox unit (10) according to the previous claim, **characterised in that** the electronic controls (22) for the combustion engine (12), the two electric machines (14, 16) and the two clutches (32, 34) establish at least:
- one fully electric operating mode (FE) of the engine-gearbox unit (10), in which the combustion engine (12) is switched off, the first clutch (32) is disengaged, the second clutch (34) is engaged and the two electric machines (14, 16) are operating as motors, with the electronic controls (22) regulating the torque supplied by the two electric machines (14, 16),
- one recharging when stationary mode (FRA), in which the combustion engine (12) is running, the first clutch (32) is disengaged, the second clutch (34) is engaged and the first electric machine (14) is operating as a generator,
- one combustion engine (12) starting mode (FD), in which, regardless of the state of the first (32) and second (34) clutches and the first electric machine (14), the second electric machine (16) is operating as a motor,
- a first low-speed hybrid operating mode (FH1) in which the combustion engine (12) is running, the first clutch (32) is disengaged, the second clutch (34) is engaged, the first electric machine (14) is operating as a motor to immobilise the sun gear (56) on the second planetary gear train (50), and the second electric machine (16) is operating with no load,
- a second low-speed hybrid operating mode (FH2) in which the combustion engine (12) is running, the first clutch (32) is disengaged, the second clutch (34) is engaged, the first electric machine (14) is operating with no load and the second electric machine (16) is operating as a motor to immobilise the planetary pinion (62) on the third planetary gear train (60),
- an intermediate-speed hybrid operating mode (FH3) in which the combustion engine (12) is running, the first clutch (32) is engaged, the second clutch (34) is disengaged, the first electric machine (14) is operating as a motor to immobilise the planetary pinion (42) on the first planetary gear train (40) and the second electric machine (16) is operating with no load,
- a high-speed operating mode (FVE) in which the combustion engine (12) is running, the two clutches (32, 34) are engaged and the two electric machines (14, 16) are operating with no load.

9. Engine-gearbox unit (10) according to claim 6, **characterised in that** the sun gear (46) on the first planetary gear train (40) is able to be rotatably connected to the first electric machine (14) by means of a first clutch (32), the planetary pinion (42) on the first planetary gear train (40) and the pinion carrier (54) on the second planetary gear train (50) are rotatably connected to each other and rotatably connected to the output shaft (13) of the combustion engine (12), the planetary pinions (52, 62) on the second (50) and third (60) planetary gear trains are rotatably connected to each other, and the pinion carrier (44) on the first planetary gear train (40), the sun gear (56) on the second planetary gear train (50) and the pinion carrier (64) on the third planetary gear train (60) are rotatably connected to each other and rotatably connected to the axle (18).

10. Engine-gearbox unit (10) according to claim 9, **characterised in that** the planetary pinion (62) on the third planetary gear train (60) is able to be rotatably connected to the first electric machine (14) by means of a second clutch (34), and the sun gear (66) on the third planetary gear train (60) is rotatably connected to the second electric machine (16).

11. Engine-gearbox unit (10) according to claim 9, **characterised in that** the sun gear (66) on the third planetary gear train (60) is able to be rotatably connected to the first electric machine (14) by means of a second clutch (34), and the planetary pinion (62) on the third planetary gear train (60) is rotatably connected to the second electric machine (16).
